# EUROPÄISCHE PATENTSCHRIFT

(11) **EP 1 156 934 B1**
(45) Veröffentlichungstag und Bekanntmachung des Hinweises auf die Patenterteilung: **09.07.2003**
(21) Anmeldenummer: 00907594.6
(22) Anmeldetag: 22.02.2000
(51) Int. Cl.: B42D 15/00, B42D 15/10, B41M 3/14

(54) **WERTDOKUMENT**
VALUE DOCUMENT
DOCUMENT DE SECURITE

(30) Priorität: 23.02.1999 DE 19907697
(43) Veröffentlichungstag der Anmeldung: 28.11.2001
(73) Patentinhaber: Giesecke & Devrient GmbH, 81677 München (DE)
(72) Erfinder: PLASCHKA, Reinhard, D-86949 Windach (DE); BRAUN, Eckhard, D-81547 München (DE); KAULE, Wittich, D-82275 Emmering (DE)
(74) Vertreter: Klunker, Hans-Friedrich, Dr.
(86) Internationale Anmeldenummer: EP0001428
(87) Internationale Veröffentlichungsnummer: WO00050249

(56) Entgegenhaltungen:
- EP-A- 0 435 029
- EP-A- 0 604 900
- EP-A- 0 683 471
- EP-A- 0 806 457
- WO-A-93/12506
- US-A- 5 422 744

## Beschreibung

Die Erfindung betrifft ein Wertdokument, wie ein Wertpapier oder eine Ausweiskarte, mit einem Sicherheitselement, das ein optisch variables Material aufweist, das bei unterschiedlichen Betrachtungswinkeln unterschiedliche Farbeindrücke vermittelt. Die Erfindung betrifft ferner eine Folie, ein mehrschichtiges Transfermaterial und eine Druckfarbe mit einem derartigen optisch variablen Material.

Angesichts der hohen Qualität von Farbkopien ist es notwendig, Wertdokumente, wie Banknoten, Ausweiskarten oder dergleichen, mit zusätzlichen, nicht kopierbaren bzw. nicht originalgetreu kopierbaren Sicherheitselementen zu versehen. Häufig werden hierfür optisch variable Elemente, wie Hologramme, Interferenzschichtelemente oder flüssigkristalline Materialien, verwendet, die bei unterschiedlichen Betrachtungswinkeln unterschiedliche Farbeindrücke vermitteln. Das Farbenspiel dieser Elemente stellt ein sehr auffälliges, visuell leicht erkennbares Sicherheitsmerkmal dar, so dass eine Fotokopie, die dieses Farbenspiel nicht aufweist, auch von einem Laien sehr einfach von einem Originaldokument unterschieden werden kann. Einer maschinellen Prüfung sind optisch variable Elemente jedoch nur sehr bedingt und unter hohem technischen Aufwand zugänglich.

Die EP 0 435 029 B1 beschreibt ein Wertdokument mit einem optisch variablen, flüssigkristallinen Sicherheitsmerkmal. Es werden insbesondere Flüssigkristallpolymere als Sicherheitselemente verwendet, die nach geeignet orientierter Herstellung bei Raumtemperatur einen kunststoffähnlichen Festkörper mit einem ausgeprägten Farbwechsel darstellen. Mit ihnen lassen sich verschiedene Arten von Sicherheitselementen herstellen. So können Kunststofffolien mit einer Schicht aus flüssigkristallinen Polymeren beschichtet und die resultierende Materialbahn anschließend zu schmalen Bändern oder Fäden geschnitten werden, die als Sicherheitsfäden in Papier oder andere Stoffe eingebettet werden können. Auch die Herstellung von Transferbändern, die in ihrem Schichtaufbau eine Schicht aus flüssigkristallinen Polymeren enthalten, wird in der EP 0 435 029 B1 bereits vorgeschlagen. Flüssigkristalline Materialien besitzen neben den optisch variablen Eigenschaften auch lichtpolarisierende Eigenschaften, die ausgenutzt werden, um das Sicherheitselement zusätzlich einer maschinellen Prüfung zugänglich zu machen. Da es sich bei der Lichtpolarisation lediglich um einen schwachen Effekt handelt, der stark durch Umwelteinflüsse, wie Verschmutzung, Falten oder Knicke im Wertdokument, beeinträchtigt wird, ist der messtechnische Aufwand für eine zuverlässige automatisierte Prüfung allerdings sehr hoch.

In der WO 93/12506 wird ein Sicherheitselement beschrieben, das ein optisch lesbares Muster wie ein Hologramm und magnetisch codiesre Informationen umfaßt, wobei die magnetisch codierte Information Informationen über die relative Position des optisch lesbaren Musters zur magnetisch codierten Information enthält.

Der Erfindung liegt daher die Aufgabe zugrunde, ein Wertdokument mit einem optisch variablen Sicherheitselement vorzuschlagen, das neben dem visuell gut erkennbaren, optisch variablen Effekt eine verbesserte Maschinenlesbarkeit aufweist

Der Erfindung liegt der überraschend einfache Gedanke zugrunde, nicht die Maschinenlesbarkeit des optisch variablen Materials selbst zu verbessern, sondern das optisch variable Material mit wenigstens einem Merkmalstoff zu kombinieren, der einfach und sicher maschinenlesbar ist und gleichzeitig den visuell sichtbaren, optisch variablen Effekt des optisch variablen Materials nicht beeinträchtigt. Dementsprechend weist das erfindungsgemäße Sicherheitselement ein optisch variables Material auf, das bei unterschiedlichen Betrachtungswinkeln unterschiedliche Farbeindrücke vermittelt und ein Pigment oder ein Teilchen mit geeigneter größe und Formfaktor ist, sowie einen Merkmalstoff, der den visuell sichtbaren, optisch variablen Effekt des optisch variablen Materials nicht beeinträchtigt und maschinell prüfbar ist. Das Sicherheitselement kann dabei als separates Element vorbereitet und anschließend mit dem zu sichernden Wertgegenstand verbunden oder direkt auf dem Wertgegenstand erzeugt werden, beispielsweise in Form eines Druckbildes.

Als Merkmalstoff können beispielsweise Lumineszenzstoffe, elektrisch leitfähige Polymere oder Ruße, IR-absorbierende Stoffe, aber auch magnetische Materialien oder thermochrome Materialien verwendet werden. Vorzugsweise werden im visuellen Spektralbereich transparente Merkmalstoffe eingesetzt.

Im Falle der Lumineszenzstoffe eignen sich im Speziellen außerhalb des visuellen Spektralbereichs lumineszierende Stoffe mit schmalen Emissionsbanden, die maschinell sehr gut nachweisbar sind. Bevorzugt werden anorganische Lumineszenzstoffe verwendet, aber je nach Anwendung kann es auch sinnvoll sein, andere Lumineszenzstoffe zu verwenden.

Magnetmaterialien besitzen häufig eine schwarze bzw. dunkle Eigenfarbe. Bei entsprechender Dosierung der Mengenkonzentration können sie jedoch dennoch sehr vorteilhaft als Merkmalstoff im Sinne der Erfindung verwendet werden. Denn die dunklen Magnetmaterialien absorbieren die diffuse Streustrahlung in der Umgebung des optisch variablen Materials und verstärken somit die Brillanz des optisch variablen Effekts.

Als optisch variables Material können beispielsweise flüssigkristalline Materialien, vorzugsweise flüssigkristalline Polymermaterialien oder auch Interferenzschichtmaterialien verwendet werden.
Das optisch variable Material liegt in Form von Pigmenten bzw. Teilchen mit geeigneter Partikelgröße, -verteilung und Formfaktor vor, da diese beliebigen anderen Materialien zugemischt werden können.

Dabei kann zwischen Pigmenten mit Körperfarbe und solchen ohne Körperfarbe gewählt werden. Letztere sind weit gehend transparent, so dass ihr Farbeindruck stark durch den Untergrund mitgeprägt wird. Aber auch mikroverkapselte Flüssigkristalle können eingesetzt werden.

Gemäß einer bevorzugten Ausführungsform besteht das Sicherheitselement aus einer zumindest in Teilbereichen des Wertdokuments aufgebrachten Farbschicht. Die Farbschicht besteht dabei zumindest aus einem Bindemittel und darin dispergierten flüssigkristallinen Pigmenten sowie Merkmalstoffen. Wird die Farbschicht mit Hilfe eines Druckverfahrens, wie beispielsweise dem Siebdruck, Flexodruck oder Stichtiefdruck aufgebracht, so enthält die Druckfarbe optisch variable Pigmente in 10 bis 30 Gew.-% und Merkmalstoff in 0,01 bis 30. Gew.-% bezogen auf das Bindemittel, je nach verwendetem Merkmalstoff. Handelt es sich bei dem verwendeten Merkmalstoff um einen Lumineszenzstoff, so werden 0,01 bis 30 Gew.-%, vorzugsweise 0,01 bis 10 Gew.-%, im Falle von Magnetstoffen 5 bis 80 Gew.-%, vorzugsweise 10 bis 20 Gew.-% zugesetzt. Werden für den Merkmalstoff elektrisch leitfähige Polymere verwendet, so kann das elektrisch leitfähige Polymer auch das Bindemittel der Farbschicht bilden.

Alternativ kann das Sicherheitselement auch in Form eines Fadens oder Bandes vorliegen, das entweder vollständig an der Oberfläche des Wertdokuments angeordnet ist oder als sogenannter Fenstersicherheitsfaden lediglich teilweise an der Oberfläche des Wertdokuments frei zugänglich ist. Das Sicherheitselement weist in diesem Fall ein Kunststoffmaterial auf, welches beispielsweise das optisch variable Material sowie den Merkmalstoff enthält. Alternativ kann auf das Kunststoffmaterial auch zumindest bereichsweise eine Farbschicht aufgebracht werden, die das optisch variable Material sowie den Merkmalstoff enthält. Gemäß einer weiteren Variante weist das Sicherheitselement ein elektrisch leitfähiges Kunststoffmaterial auf, auf oder in welchem das optisch variable Material angeordnet ist.

Gemäß einer weiteren Ausführungsform der Erfindung kann das Sicherheitselement auch aus einer Kunststofffolie bestehen, welche das optisch variable Material sowie den Merkmalstoff enthält. Diese Kunststofffolie kann beispielsweise als Schutzschicht für bestimmte Bereiche des Wertdokuments oder als vollflächige Deckfolie, beispielsweise im Falle von Ausweiskarten, eingesetzt werden.

Ebenso ist es möglich, das optisch variable Material und den Merkmalstoff einem Kunststoffgranulat zuzusetzen, das anschließend zu fertigen Kunststoffteilen weiterverarbeitet wird. Dies kann beispielsweise durch Extrusion oder Spritzgusstechnik erfolgen.

Schließlich ist es auch möglich, das Sicherheitselement als mehrschichtiges Transferelement auszubilden, in dessen Schichtaufbau das optisch variable Material und der Merkmalstoff angeordnet sind. Das Transferelement kann dabei als selbsttragendes Etikett ausgeführt sein, das aus einer Trägerschicht besteht, auf oder in welcher die optisch variable Schicht sowie der Merkmalstoff angeordnet werden. Alternativ kann das Transferelement auch keine Trägerschicht aufweisen. In diesem Fall wird das Transferelement mit Hilfe einer Heißprägefolie erzeugt, deren Trägerband nach dem Übertrag des Transferelements, d.h. des Sicherheitselements wieder abgezogen wird.

Merkmalstoff und optisch variables Material müssen jedoch nicht grundsätzlich gleichzeitig auf den Wertgegenstand aufgebracht werden. Es kann beispielsweise auch zuerst der Merkmalstoff aufgebracht und anschließend darüber das optisch variable Material angeordnet werden. Diese Vorgehensweise ist besonders vorteilhaft, wenn als Merkmalstoff dunkle Magnetmaterialie oder elektrisch leitfähiger Ruß und als optisch variables Material weitgehend transparente Materialien ohne oder mit geringer Körperfarbe verwendet werden. In diesem Fall wird zuerst der Merkmalstoff in Form eines Druckbildes aufgebracht und anschließend im gleichen Bereich eine Schicht aus optisch variablem Material, die auch im Druckbild des Merkmalstoffs vorhandene Lücken abdecken kann. Da der dunkle Untergrund die durch das optisch variable Material hindurchtretende Strahlung sowie Streustrahlung absorbiert, tritt der optisch variable Effekt im Bereich des magnetischen Druckbildes besonders stark hervor.

Die Fälschungssicherheit dieses Sicherheitselements kann noch zusätzlich erhöht werden, wenn als Merkmalstoff ein Magnetmaterial verwendet wird und der Magnetschicht Ruß beigemischt wird. Bereits Konzentrationen von 1 bis 5 Gew.-% Ruß ergeben eine gute elektrische Leitfähigkeit, die maschinell einfach nachweisbar ist.

Die Fälschungssicherheit wird zusätzlich erhöht, da der Merkmalstoff in Form einer Codierung oder einer alphanumerischen Information aufgebracht wird. Im einfachsten Fall handelt es sich bei der Codierung um einen Barcode. Sofern die Codierung visuell nicht sichtbar sein soll, kann die Umgebung der Codierung passerhaltig mit einer Tarnschicht versehen werden, die visuell von der Codierung nicht zu unterscheiden ist, aber keinen Merkmalstoff enthält. Eine derartige Tarnung kann auch sinnvoll sein, wenn die den Merkmalstoff enthaltende Schicht transparent ist, da die Schicht unter Umständen im Glanzwinkel zu erkennen ist.

Bei der maschinellen Überprüfung des Sicherheitselements können mehrere unterschiedliche Eigenschaften ausgewertet werden. Die meisten optisch variablen Materialien, insbesondere die flüssigkristallinen Materialien, sind im IR-Spektralbereich transparent. Werden diese Materialien mit einem im visuellen Spektralbereich transparenten Lumineszenzstoff kombiniert, der im IR-Spektralberich emittiert, so kann bei der maschinellen Überprüfung zum Nachweis des optisch variablen Materials das spektrale Verhalten im visuellen und infraroten Wellenlängenbereich ausgewertet werden. Gleichzeitig muss am gleichen Ort die besondere physikalische Eigenschaft, wie beispielsweise Lumineszenz oder elektrische Leitfähigkeit des Merkmalstoffs überprüft werden.

Ist der Merkmalstoff nicht transparent, so kann dennoch das gleiche Messprinzip angewendet werden. In diesem Fall wird im visuellen Spektralbereich die Überlagerung der Spektren von optisch variablem Material und Merkmalstoff als Referenzwert zugrunde gelegt.

Das optisch variable Material kann schließlich auch mit thermochromen Materialien kombiniert werden, deren Farbumschlag mit einem entsprechenden optischen Sensor nachgewiesen werden kann. Als thermochrome Materialien können beispielsweise entsprechende Flüssigkristallmaterialien verwendet werden, die einen definierten Farbumschlag zeigen und kurze Reaktionszeiten aufweisen.

Die Fälschungssicherheit des erfindungsgemäßen Sicherheitselements kann schließlich noch erhöht werden, wenn mehrere optisch variable Materialien und/oder Merkmalstoffe verwendet werden, die in der gleichen oder in unterschiedlichen Schichten des Sicherheitselements angeordnet sein können.

Wird als optisch variables Material ein Flüssigkristallmaterial verwendet, können auch in diese Schicht zusätzliche Informationen eingebracht werden.

Denn Flüssigkristalle haben die Eigenschaft unpolarisiertes einfallendes Licht in Komponenten mit unterschiedlicher Polarisation zu zerlegen. Je nach chemischer Zusammensetzung des Flüssigkristallmaterials wird nur eine dieser Komponenten reflektiert. Diese Eigenschaft kann gemäß der Erfindung zur Darstellung von Informationen verwendet werden. Beispielsweise kann eine beliebige Information mit einer Druckfarbe erzeugt werden, die ein linksdrehendes flüssigkristallines Material enthält. Die Umgebung dieser Information wird passerhaltig mit einer Druckfarbe beduckt, die ein rechtsdrehendes flüssigkristallines Material enthält. Beide Druckfarben zeigen bei normaler Beleuchtung das gleiche Erscheinungsbild, so dass die Information unter normalen Beleuchtungsbedingungen nicht zu erkennen ist. Erst bei Betrachtung durch ein entsprechendes Polarisationsfilter wird die Information erkennbar, da die durch das Polarisationsfilter hindurchtretende Strahlung nur von einem der Flüssigkristallmaterialien reflektiert wird und damit ein Helligkeitskontrast zwischen den beiden Druckschichten entsteht.

Eines oder beide der flüssigkristallinen Materialien können zusätzlich thermochrome Eigenschaften aufweisen, so dass bei entsprechender Erwärmung dieses Materials, zum Beispiel durch die Körperwärme eines Fingers, ein Farbumschlag stattfindet, der maschinell und/oder visuell prüfbar ist.

Weisen beide flüssigkristallinen Materialien thermochrome Eigenschaften auf, so ergeben sich weitere interessante Ausführungsvarianten. Zum Beispiel können die Materialien so gewählt werden, dass sie zwar bei der gleichen Temperatur einen Farbwechsel zeigen, die wahrnehmbaren Farben jedoch unterschiedlich sind. Auf diese Weise können ebenfalls Informationen dargestellt werden, die durch die Erwärmung erkennbar werden, verschwinden oder deren Informationsinhalt sich ändert. Vorzugsweise werden Materialien verwendet, die unter normalenBedingungen gleich aussehen und durch Erwärmung unterschiedliche Farben zeigen, die zueinander kontrastieren. Auch der Einsatz von Materialien, die durch Erwärmung transparent oder opak werden, ist möglich.

Die Einbringung der thermochromen Zusatzeigenschaft kann direkt über die chemische Formulierung der flüssigkristallinen Materialien erfolgen. Für eine optimale Steuerung der einzelnen Eigenschaften bietet es sich allerdings auch an, mehrere flüssigkristalline Materialien zu mischen, wobei jedes der flüssigkristallinen Materialien eine spezielle Eigenschaft aufweist. D.h., es können beispielsweise zwei flüssigkristalline Basiskomponenten gewählt werden, die rechts- bzw. linksdrehende Eigenschaften und ein übereinstimmendes Reflexionsverhalten aufweisen, aber nicht thermochrom sind. Dieser werden mit entsprechenden thermochromen flüssigkristallinen Materialien abgemischt.

Das erfindungsgemäße Sicherheitselement kann zudem nicht nur zur Sicherung von Wertdokumenten, wie Banknoten, Ausweiskarten, Pässen, Aktien oder dergleichen verwendet werden, sondern kann auf bzw. in beliebigen zu sichernden Gegenständen angeordnet werden, wie beispielsweise Tickets, Bücher, CD's, Verpackungen beliebiger Art etc.

Weitere Vorteile und Ausführungsformen der Erfindung werden anhand der Figuren erläutert.

Es zeigen:
- Fig. 1: ein erfindungsgemäßes Wertdokument,
- Fig. 2: eine Ausführungsform des erfindungsgemäßen Sicherheitselements,
- Fig. 3: eine weitere Ausführungsform des erfindungsgemäßen Sicherheitselements,
- Fig. 4: eine weitere Ausführungsform des erfindungsgemäßen Sicherheitselements,
- Fig. 5: eine weitere Ausführungsform des erfindungsgemäßen Sicherheitselements,
- Fig. 6: eine weitere Ausführungsform des erfindungsgemäßen Sicherheitselements,
- Fig. 7: eine weitere Ausführungsform des erfindungsgemäßen Sicherheitselement,
- Fig. 8: eine weitere Ausführungsform des erfindungsgemäßen Sicherheitselements,
- Fig. 9: eine weitere Ausführungsform des erfindungsgemäßen Sicherheitselements in Aufsicht,
- Fig. 10: spezielle Ausführungsform einer erfindungsgemäßen Flüssigkristallschicht mit rechts- und linksdrehenden Polarisationseigenschaften.

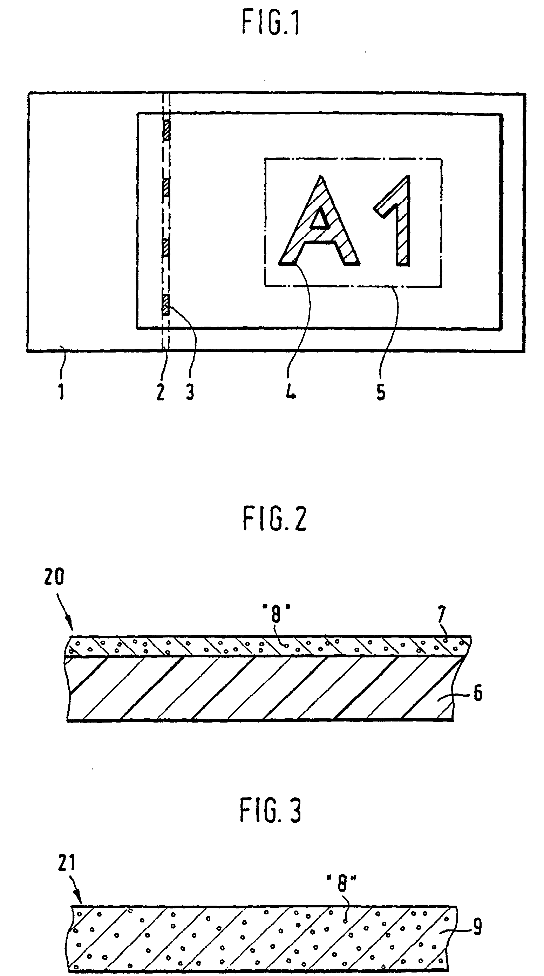

Fig. 1 zeigt ein erfindungsgemäßes Sicherheitsdokument 1 in Form einer Banknote. In diese Banknote ist ein sogenannter Fenstersicherheitsfaden 2 eingewebt, der in bestimmten Bereichen 3 direkt an die Oberfläche des Papiers tritt. Die dazwischenliegenden, in der Papierbahn liegenden Bereiche des Fadens 2 sind in der Figur strichliert dargestellt. Das Wertdokument 1 weist zusätzlich einen Aufdruck 4 auf, der mit einer erfindungsgemäßen Druckfarbe erzeugt wurde. Dieser Aufdruck 4 bildet das erfindungsgemäße Sicherheitselement. Da in der Regel nicht der gesamte Aufdruck des Wertdokuments mit der erfindungsgemäßen Druckfarbe erzeugt wird, handelt es sich um ein lokal begrenztes Sicherheitselement, was in Fig. 1 durch den strichpunktiert eingegrenzten Bereich 5 angedeutet wird. Falls erforderlich, kann jedoch auch der gesamte Druck mit der erfindungsgemäßen Druckfarbe erfolgen.

Die erfindungsgemäße Druckfarbe enthält ein optisch variables Material, wie beispielsweise flüssigkristalline Pigmente oder Interferenzschichtpigmente sowie wenigstens einen maschinenlesbaren Merkmalstoff. Die optisch variablen Pigmente können eine Körperfarbe aufweisen, wenn der Aufdruck eher deckend sein soll. Für den Fall, dass darunter liegende Informationen oder Farbschichten sichtbar bleiben sollen, werden transluzente optisch variable Materialien ohne Körperfarbe verwendet.

Bei dem maschinenlesbaren Merkmalstoff kann es sich um im visuellen Spektralbereich transparente Lumineszenzstoffe handeln. Transparente Merkmalstoffe bieten den Vorteil, dass sie den visuellen Farbeffekt des optisch variablen Materials nicht beeinträchtigen und auch sonst in keiner Weise visuell in Erscheinung treten. Da sich Fälscher in aller Regel darauf beschränken, den visuellen Eindruck eines Wertgegenstands nachzuahmen, können diese Fälschungen sehr leicht durch eine Überprüfung der maschinell nachweisbaren Eigenschaft des Merkmalstoffs aufgedeckt werden.

Aber auch die Verwendung von Magnetpigmenten, insbesondere schwarzen Magnetpigmenten, ist möglich. Die Konzentration der Magnetpigmente muss dabei jedoch so gewählt werden, dass der visuelle Eindruck der optisch variablen Pigmente nicht beeinträchtigt wird. Werden die Magnetpigmente in geringen Konzentrationen zugesetzt, so unterstützen sie sogar den optischen Effekt der optisch variablen Pigmente, da sie die diffuse Streustrahlung absorbieren.

Fig. 2 zeigt eine weitere Ausführungsform des erfindungsgemäßen Sicherheitselements. In diesem Fall handelt es sich um einen Sicherheitsfaden 20, der, wie bereits in Fig. 1 gezeigt, als Fenstersicherheitsfaden in die Banknote eingebettet sein kann. Er besteht aus einem Trägermaterial 6, das aus einem transparenten Kunststoffmaterial bestehen kann. Auf diesem Trägermaterial ist eine optisch variable Schicht 7 angeordnet, die den Merkmalstoff 8 enthält. Die optisch variable Schicht 7 kann dabei als Druckschicht oder ebenfalls als Folienschicht ausgeführt sein. Im Falle einer Farbschicht kann der Merkmalstoff 8 beispielsweise das Bindemittel darstellen.

Fig. 3 zeigt eine weitere Ausführungsform des erfindungsgemäßen Sicherheitselements 21. In diesem Fall handelt es sich um eine selbsttragende Folie 9, die sowohl den optisch variablen Effekt als auch den Merkmalstoff 8 aufweist. Diese Folie kann in Form von Etiketten auf einem zu sichernden Gegenstand beliebiger Art zur Produktsicherung aufgebracht werden. Sie kann alternativ auch als Deckfolie, beispielsweise für Pässe oder Ausweiskarten dienen. Die Folie 9 kann jedoch auch in Bänder oder Fäden bestimmter Breite geschnitten werden, die auf einem Wertdokument oder einem Produkt befestigt oder als Fensterfaden in ein Wertpapier eingebettet werden.

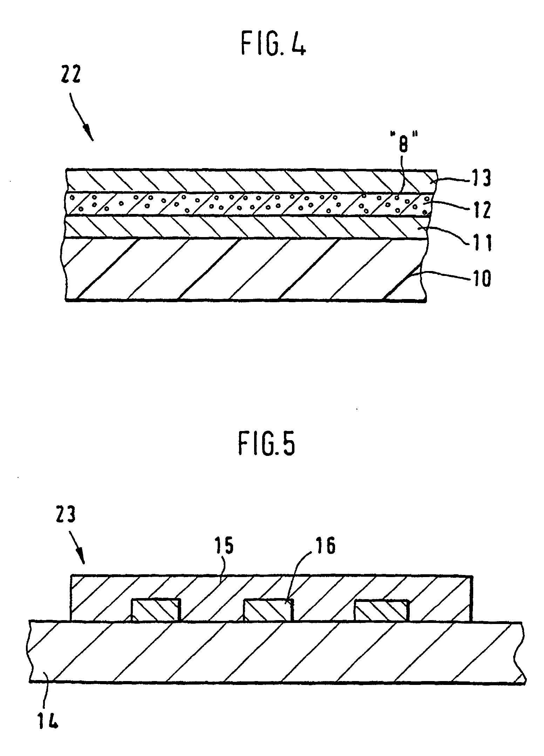

Fig. 4 zeigt ein erfindungsgemäßes Transfermaterial 22, in dessen Schichtaufbau das optisch variable Material sowie der Merkmalstoff angeordnet sind. Es besteht aus einer Trägerfolie 10, die mit einer Trennschicht 11 versehen sein kann, um ein Ablösen des Schichtaufbaus von dem Trägerband zu ermöglichen. Die Schicht 12 kann als Folienschicht oder auch als Druckschicht ausgebildet sein und enthält sowohl den Merkmalstoff 8 als auch das optisch variable Material. Auf der Schicht 12 kann schließlich eine Klebstoffschicht 13, vorzugsweise eine Heißschmelzkleberschicht angeordnet sein. Die Schichtfolge des Transfermaterials 22 kann selbstverständlich je nach Anwendungsfall durch zusätzliche Schichten ergänzt werden. Handelt es sich beispielsweise bei der Schicht 12 um eine Druckschicht, so kann es sinnvoll sein, zwischen der Trennschicht 11 und der Schicht 12 eine weitere Schutzschicht anzuordnen, um das Sicherheitselement nach dem Übertrag auf das Wertdokument vor schädlichen Umwelteinflüssen zu schützen.

In diese Schutzschicht kann ebenfalls ein Merkmalstoff eingebracht sein. Eine weitere Alternative sieht vor, den Merkmalstoff nur in diese Schutzschicht einzubringen, so dass die Schicht 12 lediglich das optisch variable Material enthält.

Dieses Transfermaterial 22 wird anschließend mit dem zu sichernden Wertdokument in Kontakt gebracht und in den zu übertragenden Bereichen Druck und/oder Wärme ausgesetzt, so dass sich der auf dem Trägermaterial 10 befindliche Schichtaufbau fest mit dem Dokumentenmaterial verbindet und beim anschließenden Abziehen des Trägermaterials 10 auf dem Dokument verbleibt.

Das Transfermaterial 22 kann analog zur oben beschriebenen selbsttragenden Folie 9 auch zur Absicherung beliebiger anderer Gegenstände verwendet werden.

In Fig. 5 ist ein Wertdokument 14 mit einer weiteren Ausführungsform des erfindungsgemäßen Sicherheitselements 23 im Querschnitt dargestellt. Auf dem Wertdokument 14 befindet sich ein dunkelfarbiger Aufdruck 16, der Merkmalstoff enthält. Das Druckbild 16 kann beispielsweise eine Codierung oder eine alphanumerische Information darstellen. Darüber ist in einem großflächigen Bereich das optisch variable Material 15 angeordnet, das keine oder nur eine geringe Körperfarbe aufweist. Dabei kann es sich beispielsweise um flüssigkristalline Polymermaterialien oder auch Interferenzschichtmaterialien handeln, wie sie von der Fa. Merck unter dem Handelsnamen IRIODINE® vertrieben werden. Sie werden vorzugsweise in Form von Pigmenten einer Druck- oder Streichfarbe beigemischt, die auf das Dokument aufgebracht wird. Im Bereich des dunklen Druckbildes 16 tritt der visuelle Effekt des optisch variablen Materials 15 deutlich hervor, während er in den übrigen Bereichen aufgrund der Transparenz des optisch variablen Materials und der auftretenden diffusen Streustrahlung nur sehr schwach zu erkennen ist.

Das dunkle Druckbild 16 kann mittels einer magnetpigmenthaltigen Druckfarbe erzeugt werden, oder einer Druckfarbe, der ein anderer Merkmalstoff beigemischt wurde. Hierbei kann es sich beispielsweise um eine schwarze IR-transparente Druckfarbe handeln, der ein oder mehrere im IR-Spektralbereich emittierende Lumineszenzstoffe beigemischt werden. Alternativ kann auch eine Ruß enthaltende Druckfarbe verwendet werden, die eine maschinell einfach zu überprüfende elektrische Leitfähigkeit aufweist.

Eine zusätzliche Absicherung lässt sich erreichen, wenn das Druckbild 16 nur bereichsweise aus einer maschinell nachweisbaren Druckfarbe besteht. Das heißt, Teile des gesamten Druckbildes 16 werden mit einer dunklen Druckfarbe gedruckt, die weder ein Magnetpigment noch einen Lumineszenzstoff enthält, und die verbleibenden Teile werden mit der merkmalstoffhaltigen Druckfarbe erzeugt. Auf diese Weise kann bei der maschinellen Überprüfung nicht nur die Existenz des Merkmalstoffs im Bereich des optisch variablen Materials nachgewiesen werden, sondern zusätzlich dessen Verteilung ausgewertet werden.

Die für die Erzeugung des Druckbildes 16 verwendete Druckfarbe kann selbstverständlich auch mehrere Merkmalstoffe, wie beispielsweise eine Mischung aus Magnetpigmenten und Lumineszenzstoffen enthalten. Auch die Verwendung mehrerer optisch variabler Materialien ist möglich.

Besonders vorteilhaft ist diese Ausführungsform gemäß Fig. 5, wenn mit Hilfe von optisch variablen Druckfarben hochaufgelöste Bilder erzeugt werden sollen. Denn aufgrund der notwendigen Pigmentgröße und der plättchenförmigen Gestalt der meisten optisch variablen Materialien können diese nicht in Form von feinen, hochauflösenden Mustern, wie beispielsweise Guillochen mit einer Linienstärke kleiner 0,1 mm als Positiv- oder Negativdruckbild, verdruckt werden. Sie werden daher meist im Siebdruck aufgebracht. Feine Linienstärken von weniger als 0,1 mm dagegen lassen sich üblicherweise nur mit Offsetdruck, indirektem Buchdruck oder ähnlichen Verfahren erreichen. Die Merkmalstoffe können nun mit diesen Druckverfahren verarbeitet werden, so dass Druckfarben mit Merkmalstoffen hochaufgelöst verdruckt werden können. Dies hat zur Folge, dass am fertigen Sicherheitselement der visuelle Effekt des optisch variablen Materials aufgrund des dunklen Untergrunds dennoch als hochaufgelöstes Muster in Erscheinung tritt.

Alternativ kann das hochaufgelöste Muster mit einer herkömmlichen dunklen bis schwarzen Druckfarbe gedruckt werden, das durch ein angrenzendes, den Merkmalstoff enthaltendes Muster ergänzt wird. Die den Merkmalstoff enthaltende Schicht ist in diesem Fall vorzugsweise transparent.

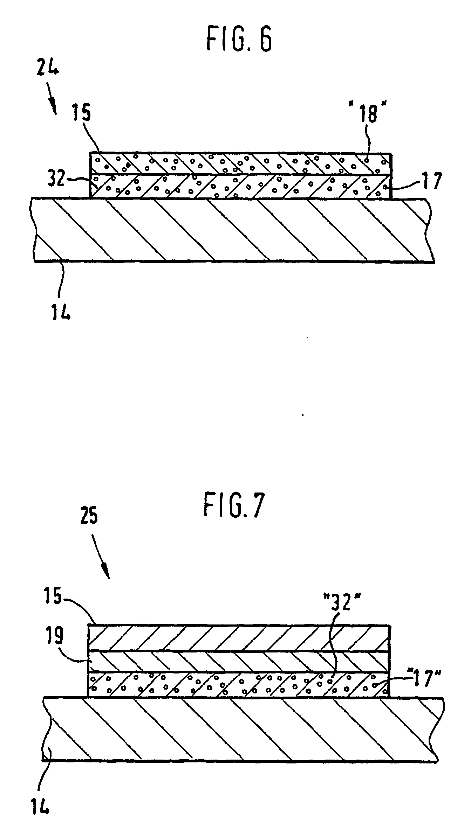

Fig. 6 zeigt ein Wertdokument 14, auf dem eine weitere Ausführungsform des erfindungsgemäßen Sicherheitselements 24 angeordnet ist. Dieses Sicherheitselement 24 besteht aus einer magnetischen Schicht 32, die Rußanteile 17 enthält. Auf dieser Schicht ist eine transluzente, optisch variable Schicht 15 angeordnet, die zusätzlich einen Lumineszenzstoff 18 enthält. Bei diesem Lumineszenzstoff 18 kann es sich beispielsweise um einen im visuellen Spektralbereich transparenten Lumineszenzstoff handeln, der unter UV-Beleuchtung im sichtbaren Spektralbereich emittiert.

Dieses einfach herzustellende Sicherheitselement weist mehrere maschinell sowie visuell prüfbare Eigenschaften auf. So kann für die visuelle Überprüfung sowohl das optisch variable Material verwendet werden, als auch die durch UV-Licht anregbare Emission des Lumineszenzstoffes. Für eine maschinelle Auswertung können die magnetischen Eigenschaften sowie die Lumineszenzemission unter UV-Beleuchtung nachgewiesen werden. Zusätzlich kann auch die durch die Rußbeimengung erzeugte elektrische Leitfähigkeit ausgewertet werden.

Fig. 7 zeigt eine ähnliche Ausführungsform des erfindungsgemäßen Sicherheitselements 25. Auch hier wird auf dem Wertdokument 14 zuerst eine magnetische, mit Ruß versetzte Schicht 32 aufgebracht. Anschließend wird auf dieser Schicht eine Schicht 19 vorgesehen, die einen im IR-Spektralbereich emittierenden Lumineszenzstoff enthält. Darüber wird schließlich eine im IR-Spektralbereich transparente, optisch variable Schicht 15 angeordnet.

Die in den Fig. 6 und 7 gezeigten Schichten müssen nicht, wie in den Figuren dargestellt, deckungsgleich übereinander angeordnet werden. So kann die Magnetschicht, ähnlich wie in Fig. 5 gezeigt, in Form eines Druckbildes aufgebracht werden. Analoges gilt für die Lumineszenzschicht 19. Die die Merkmalstoffe enthaltenden Schichten können auch nebeneinander, zugsweise direkt aneinander angrenzend angeordnet werden.

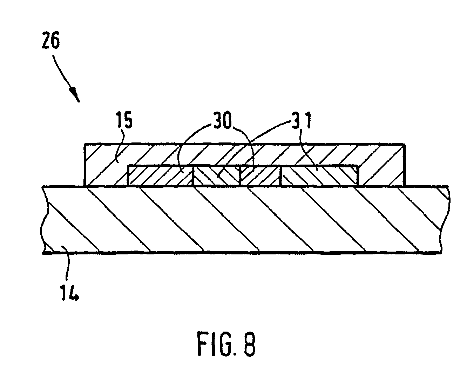

Fig. 8 zeigt eine weitere Ausführungsform des erfindungsgemäßen Sicherheitselements 26, bei welchem der Merkmalstoff in Form einer Codierung aufgebracht ist. Im gezeigten Beispiel ist eine den Merkmalstoff enthaltende Schicht in Form eines Barcodes auf dem Dokument 14 vorgesehen, der aus den voneinander beabstandeten Bereichen 30 besteht. Die Zwischenbereiche 31 sind mit einer Schicht ausgefüllt, die keinen Merkmalstoff enthält, aber visuell das gleiche Erscheinungsbild zeigt wie die Bereiche 30. Über den Schichten 30, 31 ist die optisch variable Schicht 15 angeordnet.

Eine derartige Ausführungsform ist besonders vorteilhaft, wenn es sich bei dem optisch variablen Material um ein quasi transparentes Interferenzschicht- oder Flüssigkristallmaterial handelt, dessen Farbeffekt durch einen dunklen Untergrund stark hervorgehoben wird. In diesem Fall wird der Farbeffekt der Schicht 15 im gesamten Bereich der dunklen bis schwarzen Bereiche 30, 31 hervorgehoben, aber nicht der gesamte Bereich weist einen Merkmalstoff auf. Bei dem verwendeten Merkmalstoff kann es sich beispielsweise um einen IR-absorbierenden Stoff handeln. Dieser Stoff kann gleichzeitig magnetisch sein. Die Bereiche 31 werden in diesem Fall vorzugsweise mit einer IR-transparenten Schicht bedruckt.

Gemäß einer weiteren Ausführungsform können auch nur die Bereiche 30 vorgesehen werden, d.h. auf die im visuellen Spektralbereich tarnend wirkenden Bereiche 31 kann verzichtet werden.

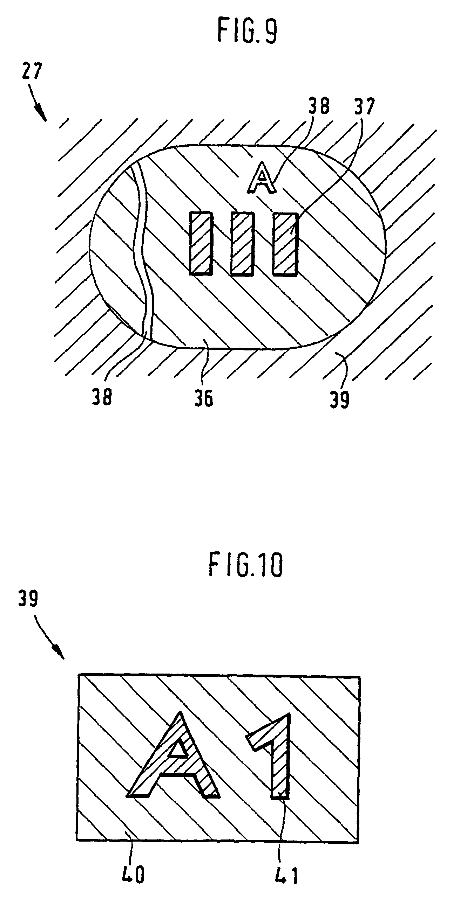

In Fig. 9 ist eine spezielle Ausführungsform des erfindungsgemäßen Sicherheitselements in Aufsicht dargestellt, die die anhand der Fig. 5 und 8 erläuterten Lehren und Ausführungsformen miteinander kombiniert. Dieses Sicherheitselement 27 besteht aus einem farbigen, vorzugsweise dunklen oder schwarzen Aufdruck, der in bestimmten Bereichen Aussparungen 38 in Form von Mustern oder alphanumerischen Zeichen aufweist. Im Bereich des Aufdrucks 36 ist zusätzlich ein Barcode 37 angeordnet, der unter normalen Beleuchtungsbedingungen das gleiche Erscheinungsbild zeigt wie der Aufdruck 36, so dass der Barcode 37 visuell nicht zu erkennen ist. In Fig. 9 wurde der Barcode 37 jedoch aus Gründen der Übersichtlichkeit deutlich erkennbar hervorgehoben. Im Gegensatz zu dem Aufdruck 36 enthält die Druckfarbe, mit welcher der Barcode 37 erzeugt wurde, einen maschinell nachweisbaren Merkmalstoff, vorzugsweise einen IR-absorbierenden Stoff. Das sich aus den Komponenten 36, 37, 38 zusammensetzende Druckbild ist vollflächig von einer transluzenten Schicht 39, vorzugsweise einer Flüssigkristallschicht, überdeckt. Wie bereits erläutert, tritt der optisch variable Effekt der Schicht 39 in erster Linie im Bereich der Aufdrucke 36, 37 deutlich hervor.

Die Herstellung des Sicherheitselements 27 kann auf unterschiedliche Arten erfolgen. So können die Aufdrucke 36, 37 passerhaltig nebeneinander gedruckt werden. Das heißt, wenn im ersten Druckgang der Aufdruck 36 erzeugt wird, so bleiben in diesem Druckgang auch die Bereiche des Barcodes 37 unbedruckt und bilden Aussparungen im Aufdruck 36. Im zweiten Druckgang wird der Barcode 37 mit einer merkmalstoffhaltigen Druckfarbe ergänzt. Alternativ können die Aufdrucke 36, 37 auch übereinander angeordnet werden. Dabei ist zu beachten, dass die Druckfarbe des Aufdrucks 36 die Maschinenlesbarkeit des Barcodes 37 nicht beeinträchtigen darf.

Gemäß einer weiteren Variante können sowohl der Aufdruck 36 als auch der Aufdruck 37 einen Merkmalstoff enthalten, wobei sich die Merkmalstoffe hinsichtlich einer physikalischen Eigenschaft unterscheiden. Vorzugsweise werden hierbei IR-absorbierende Stoffe verwendet, deren Absorptionsmaxima in unterschiedlichen Spektralbereichen liegen.

Noch aufwendiger und damit auch fälschungssicherer kann das Sicherheitselement gestaltet werden, wenn die optisch variable Schicht aus mehreren optisch variablen Materialien mit unterschiedlichen physikalischen Eigenschaften zusammengesetzt wird. Eine besondere Ausführungsform einer solchen optisch variablen Schicht ist in Fig. 10 dargestellt. Fig. 10 zeigt lediglich die in Fig. 9 dargestellte optisch variable Schicht 39 in Aufsicht. In diesem Fall setzt sich die optisch variable Schicht 39 aus zwei Materialien mit unterschiedlichen Eigenschaften zusammen. Eines der optisch variablen Materialien ist im Bereich 40 und das andere im Bereich 41 angeordnet. Der Bereich 41 hat im gezeigten Beispiel die Form von alphanumerischen Zeichen. Die Bereiche 40, 41 können jedoch auch jede andere Umrissform aufweisen.

Vorzugsweise werden für die Erzeugung der Bereiche 40,41 flüssigkristalline Materialien mit unterschiedlichen lichtpolarisierenden Eigenschaften verwendet. Je nach chemischer Zusammensetzung des Flüssigkristallmaterials wird nur Licht mit einer bestimmten Polarisation reflektiert. Die chemische Zusammensetzung kann dabei so gewählt werden, dass zwei Flüssigkristallmaterialien visuell gleich aussehen, aber unterschiedlich polarisiertes Licht reflektieren.

Werden die in Fig.10 gezeigten Bereiche 40, 41 mit derartigen Flüssigkristallmaterialien belegt, so kann die durch die Bereiche 41 dargestellte Information unter normalen Betrachtungsbedingungen nicht erkannt werden. Erst bei Betrachtung der Schicht 39 durch ein Polaristionsfilter, das nur Licht einer Polarisationsrichtung durchlässt, wird die Information erkennbar.

Gemäß einer weiteren Ausführungsform können die in den Bereichen 40, 41 angeordneten flüssigkristallinen Materialien zusätzlich mit einem Merkmalstoff, beispielsweise einem lumineszierenden Stoff versehen sein. Dabei können beide flüssigkristallinen Materialien mit dem gleichen oder auch unterschiedlichen Merkmalstoffen versehen werden, wie z.B. zwei unterschiedlichen lumineszierenden oder thermochromen Stoffen. Auch ein lumineszierender und ein thermochromer Stoff sind denkbar, da die Merkmalstoffe nicht die gleiche prüfbare Eigenschaft aufweisen müssen. Wenn das Sicherheitselement thermochrome Eigenschaften aufweisen soll, können auch die flüssigkristallinen Materialien so gewählt werden, dass sie sowohl unterschiedliche Polarisations- als auch unterschiedliche thermochrome Eigenschaften aufweisen.

So kann für den Bereich 40 ein flüssigkristallines Material verwendet werden, das linksdrehende Eigenschaften aufweist und bei Beaufschlagung mit Körperwärme einen Farbumschlag zeigt. Gleichzeitig ist das Material mit einem im visuellen Spektralbereich transparenten ersten Lumineszenzstoff versehen. Der Bereich 41 dagegen ist mit einem rechtsdrehenden flüssigkristallinen Material belegt, das ebenfalls bei Beaufschlagung mit Körperwärme einen Farbumschlag zeigt, der allerdings farblich zu demjenigen des flüssigkristallinen Materials im Bereich 40 kontrastiert. Auch dieses zweite flüssigkristalline Material ist mit einem im visuellen Spektralbereich transparenten zweiten Lumineszenzstoff versehen. Die Emissionswellenlängen der beiden Lumineszenzstoffe unterscheiden sich allerdings. Auf diese Weise kann die durch die Bereiche 40, 41 dargestellte und unter normalen Betrachtungsbedingungen nicht erkennbare Information mit Hilfe von Polarisationsfiltern über die polarisierenden Eigenschaften der Flüssigkristallmaterialien, durch Erwärmung über die thermochromen Eigenschaften der Flüssigkristalle oder durch Anregung der Emission der Lumineszenzstoffe sichtbar gemacht bzw. detektiert werden.

Diese anhand von Fig. 10 erläuterte Art der Ausgestaltung der optisch variablen Schicht kann selbstverständlich auch in allen anderen erläuterten Ausführungsformen eingesetzt werden.

Ebenso ist es möglich, die in den Figuren 5, 6, 7, 8 und 9 gezeigten Druckschichtfolgen auf einem Sicherheitsfaden bzw. in einem Transfermaterial vorzusehen. Das Transfermaterial kann dabei entweder als Heißprägefolie oder als Etikettenmaterial ausgebildet sein.

## Patentansprüche

1. Wertdokument (1, 14), wie Wertpapier oder Ausweiskarte mit einem Sicherheitselement (23, 24, 25, 26, 27), das wenigstens ein optisch variables Material (15, 39, 40, 41) aufweist, das bei unterschiedlichen Betrachtungswinkeln unterschiedliche Farbeindrücke vermittelt, und wenigstens einen maschinenlesbaren Merkmalstoff (16, 17, 18, 19, 30, 37), der den visuell sichtbaren optisch variablen Effekt des optisch variablen Materials (4, 15) nicht beeinträchtigt, wobei der Merkmalstoff (16, 17, 18, 19, 30, 37) in Form einer Codierung oder einer alphanumerischen Information vorliegt und das optisch variable Material (4, 7, 9, 15) ein Pigment oder ein Teilchen mit geeigneter Größe und Formfaktor ist.

2. Wertdokument (1, 14) nach Anspruch 1, **dadurch gekennzeichnet, dass** das Sicherheitselement (23, 24, 25, 26, 27)) aus einem Druckbild besteht, das eine erste den Merkmalstoff (17, 30, 32) enthaltende Druckschicht (16, 37) in Form der Codierung oder alphanumerischen Information aufweist, und ein über dieser Druckschicht (16, 37) angeordnetes, optisch variables Material (15, 39, 40, 41).

3. Wertdokument nach Anspruch 1 oder 2, **dadurch gekennzeichnet, dass** das Sicherheitselement (26, 27) eine zweite keinen Merkmalstoff enthaltende Druckschicht (31, 36) aufweist, die passerhaltig zur ersten Druckschicht (16, 37) angeordnet ist und das gleiche visuelle Erscheinungsbild zeigt wie die erste Druckschicht (16, 37).

4. Wertdokument (1, 14) nach wenigstens einem der Ansprüche 1 bis 3, **dadurch gekennzeichnet, dass** die erste Druckschicht eine dunkle, vorzugsweise schwarze Farbe hat.

5. Wertdokument (1, 14) nach wenigstens einem der Ansprüche 1 bis 4, **dadurch gekennzeichnet, dass** das Sicherheitselement (23, 24, 25, 26, 27) zwei flüssigkristalline Materialien (40, 41) mit unterschiedlichen Polarisationseigenschaften aufweist.

6. Wertdokument (1, 14), wie Wertpapier oder Ausweiskarte mit einem Sicherheitselement (5), das wenigstens ein optisch variables Material aufweist, das bei unterschiedlichen Betrachtungswinkeln unterschiedliche Farbeindrücke vermittelt, und wenigstens einen maschinenlesbaren Merkmalstoff, der den visuell sichtbaren optisch variablen Effekt des optisch variablen Materials nicht beeinträchtigt, wobei das optisch variable Material und der Merkmalstoff in einer Schicht (4) angeordnet sind und diese Schicht (4) in Form einer Information vorliegt und das optisch variable Material (4, 7, 9, 15) ein Pigment oder ein Teilchen mit geeigneter Größe und Formfaktor ist.

7. Wertdokument (1, 14) nach Anspruch 6, **dadurch gekennzeichnet, dass** die Schicht (4) in Form eines Aufdrucks auf dem Wertdokument (1) vorliegt.

8. Wertdokument (1, 14) nach Anspruch 6 oder 7, **dadurch gekennzeichnet, dass** die Schicht (4) ein Bindemittel aus elektrisch leitfähigem Material und darin dispergierte optisch variable Pigmente aufweist.

9. Wertdokument (1, 14) nach wenigstens einem der Ansprüche 1 bis 7, **dadurch gekennzeichnet, dass** das Sicherheitselement (5, 23, 24, 25, 26, 27) auf einer Kunststofffolie angeordnet ist, die mit dem Wertdokument (1, 14) verbunden ist.

10. Wertdokument (1, 14), wie Wertpapier oder Ausweiskarte mit einem Sicherheitselement (21), das wenigstens ein optisch variables Material aufweist, das bei unterschiedlichen Betrachtungswinkeln unterschiedliche Farbeindrücke vermittelt, und wenigstens einen maschinenlesbaren Merkmalstoff (8), der den visuell sichtbaren optisch variablen Effekt des optisch variablen Materials nicht beeinträchtigt, wobei das optisch variable Material und der Merkmalstoff (8) in einer Schicht angeordnet sind und diese Schicht eine selbstragende Kunststofffolie (9) ist und das optisch variable Material (4, 7, 9, 15) ein Pigment oder ein Teilchen mit geeigneter Größe und Formfaktor ist.

11. Wertdokument (1, 14) nach wenigstens einem der Ansprüche 1 bis 10, **dadurch gekennzeichnet, dass** die Kunststofffolie (9) in Form eines Fadens oder Bandes vorliegt, das zumindest teilweise an der Oberfläche des Wertdokuments (1) frei zugänglich ist.

12. Wertdokument (1) nach wenigstens einem der Ansprüche 1 bis 10, **dadurch gekennzeichnet, dass** die Kunststofffolie (9) in Form eines Etiketts vorliegt, das auf das Wertdokument (1) aufgebracht ist.

13. Wertdokument (1, 14) nach wenigstens einem der Ansprüche 1 bis 10, **dadurch gekennzeichnet, dass** die Kunststofffolie (9) eine Deckfolie des Wertdokuments bildet.

14. Wertdokument (1, 14) nach wenigstens einem der Ansprüche 1 bis 13, **dadurch gekennzeichnet, dass** das optisch variable Material (4, 7, 9, 15) ein flüssigkristallines Material ist.

15. Wertdokument (1, 14) nach wenigstens einem der Ansprüche 1 bis 14, **dadurch gekennzeichnet, dass** das optisch variable Material (4, 7, 9, 15) ein flüssigkristallines Polymermaterial oder ein mikroverkapseltes Flüssigkristallmaterial ist.

16. Wertdokument (1, 14) nach wenigstens einem der Ansprüche 1 bis 13, **dadurch gekennzeichnet, dass** das optisch variable Material (4, 7, 9, 15) ein Interferenzschichtmaterial ist.

17. Wertdokument (1, 14) nach wenigstens einem der Ansprüche 1 bis 16, **dadurch gekennzeichnet, dass** der maschinenlesbare Merkmalstoff (8, 18, 19) im visuellen Spektralbereich transparent ist.

18. Wertdokument (1, 14) nach wenigstens einem der Ansprüche 1 bis 17, **dadurch gekennzeichnet, dass** der maschinenlesbare Merkmalstoff (8, 19) ein außerhalb des visuellen Spektralbereichs lumineszierender Stoff ist.

19. Wertdokument (1, 14) nach Anspruch 18, **dadurch gekennzeichnet, dass** es sich bei dem Lumineszenzstoff um einen anorganischen Lumineszenzstoff handelt.

20. Wertdokument (1, 14) nach wenigstens einem der Ansprüche 1 bis 19, **dadurch gekennzeichnet, dass** der maschinenlesbare Merkmalstoff (8) ein IR-absorbierender Stoff ist.

21. Wertdokument (1, 14) nach wenigstens einem der Ansprüche 1 bis 20, **dadurch gekennzeichnet, dass** das Sicherheitselement als mehrschichtiges Transferelement auf dem Wertdokument vorliegt, in dessen Schichtaufbau das optisch variable Material und der Merkmalstoff angeordnet sind.

22. Folie (9), die wenigstens ein optisch variables Material (7,9,15,39,40, 41) aufweist, das bei unterschiedlichen Betrachtungswinkeln unterschiedliche Farbeindrücke vermittelt, **dadurch gekennzeichnet, dass** die Folie (9) zusätzlich wenigstens einen maschinenlesbaren Merkmalstoff (8) aufweist, der den visuell sichtbaren, optisch variablen Effekt des optisch variablen Materials nicht beeinträchtigt und die Folie (9) aus einem Polymermaterial besteht, in welches optisch variable Pigmente und der Merkmalstoff (8) eingebettet sind.

23. Folie (9) nach Anspruch 22, **dadurch gekennzeichnet, dass** die Folie (9) aus einem flüssigkristallinen oder elektrisch leitfähigen Polymermaterial besteht, in welches der Merkmalstoff (8) eingebettet ist.

24. Folie nach wenigstens einem der Ansprüche 22 bis 23, **dadurch gekennzeichnet, dass** auf der Folie (9) ein Sicherheitselement (23, 24, 25, 26, 27) angeordnet ist, das aus einem Druckbild besteht, das eine erste den Merkmalstoff (17, 30, 32) enthaltende Druckschicht (16, 37) aufweist, und ein über dieser Druckschicht (16, 37) angeordnetes, optisch variables Material (15, 39, 40, 41).

25. Mehrschichtiges Transfermaterial (22), das wenigstens ein optisch variables Material (12) aufweist, das bei unterschiedlichen Betrachtungswinkeln unterschiedliche Farbeindrücke vermittelt, **dadurch gekennzeichnet, dass** das Transfermaterial (22) zusätzlich wenigstens einen maschinenlesbaren Merkmalstoff (8) aufweist, der den visuell sichtbaren optisch variablen Effekt des optisch variablen Materials (12) nicht beeinträchtigt und das optisch variable Material (4, 7, 9, 15) ein Pigment oder ein Teilchen mit geeigneter Größe und Formfaktor ist.

26. Mehrschichtiges Transfermaterial (22) nach Ansprüch 25, **dadurch gekennzeichnet, dass** das Transfermaterial als Heißprägefolie oder Etikettenmaterial ausgebildet ist.

27. Druckfarbe, die wenigstens ein Bindemittel aufweist und ein optisch variables Material, das bei unterschiedlichen Betrachtungswinkeln unterschiedliche Farbeindrücke vermittelt, **dadurch gekennzeichnet, dass** die Druckfarbe zusätzlich wenigstens einen maschinenlesbaren Merkmalstoff (8) aufweist, der den visuell sichtbaren optisch variablen Effekt des optisch variablen Materials nicht beeinträchtigt.

28. Druckfarbe nach Anspruch 27, **dadurch gekennzeichnet, dass** die Druckfarbe optisch variable Pigmente in 10 bis 30 Gew.-% und Merkmalstoff in 0,01 bis 30 Gew.-%, vorzugsweise 0,01 bis 10 Gew.-% bezogen auf das Bindemittel enthält.

29. Kunststoffgranulat, **dadurch gekennzeichnet, dass** das Kunststoffgranulat wenigstens ein optisch variables Material aufweist, das bei unterschiedlichen Betrachtungswinkeln unterschiedliche Farbeindrücke vermittelt, und wenigstens einen maschinenlesbaren Merkmalstoff, der den visuell sichtbaren, optisch variablen Effekt des optisch variablen Materials nicht beeinträchtigt.

30. Verwendung einer Folie (9) gemäß wenigstens einem der Ansprüche 22 bis 24 für die Herstellung von Sicherheitselementen oder Wertdokumenten.

31. Verwendung eines mehrschichtigen Transfermaterials (22) gemäß Anspruch 25 oder 26 für die Herstellung von Sicherheitselementen oder Wertdokumenten.

32. Verwendung einer Druckfarbe gemäß Anspruch 27 oder 28 für den Sicherheitsdruck, insbesondere den Wertpapierdruck.

33. Verfahren zur Prüfung eines Wertdokuments gemäß Anspruch 1, **dadurch gekennzeichnet, dass** in einem ersten Schritt das Vorhandensein des optisch variablen Materials überprüft wird und in einem zweiten Schritt im Bereich des optisch variablen Materials der Merkmalstoff überprüft wird.

## Claims

1. A document of value (1, 14) such as a paper of value or ID card with a security element (23, 24, 25, 26, 27) having at least one optically variable material (15, 39, 40, 41) that conveys different color effects at different viewing angles, and at least one machine-readable feature substance (16, 17, 18, 19, 30, 37) that does not impair the visually visible optically variable effect of the optically variable material (4, 15), the feature substance (16, 17, 18, 19, 30, 37) being present in the form of a coding or alphanumeric information and the optically variable material (4, 7, 9, 15) being a pigment or a particle with suitable size and shape factor.

2. A document of value (1, 14) according to claim 1, **characterized in that** the security element (23, 24, 25, 26, 27) consists of a printed image having a first printed layer (16, 37) containing the feature substance (17, 30, 32), said printed layer being in the form of the coding or alphanumeric information, and an optically variable material (15, 39, 40, 41) disposed over said printed layer (16, 37).

3. A document of value according to claim 1 or 2, **characterized in that** the security element (26, 27) has a second printed layer (31, 36) containing no feature substance that is disposed in register with the first printed layer (16, 37) and shows the same visual appearance as the first printed layer (16, 37).

4. A document of value (1, 14) according to at least one of claims 1 to 3, **characterized in that** the first printed layer has a dark, preferably black, color.

5. A document of value (1, 14) according to at least one of claims 1 to 4, **characterized in that** the security element (23, 24, 25, 26, 27) has two liquid-crystal materials (40, 41) with different polarization properties.

6. A document of value (1, 14) such as a paper of value or ID card with a security element (5) having at least one optically variable material that conveys different color effects at different viewing angles, and at least one machine-readable feature substance that does not impair the visually visible optically variable effect of the optically varivariable material, the optically variable material and the feature substance being disposed in one layer (4) and said layer (4) being present in the form of information and the optically variable material (4, 7, 9, 15) being a pigment or a particle with suitable size and shape factor.

7. A document of value (1, 14) according to claim 6, **characterized in that** the layer (4) is present on the document of value (1) in the form of a print.

8. A document of value (1, 14) according to claim 6 or 7, **characterized in that** the layer (4) has a binder of electrically conductive material and optically variable pigments dispersed therein.

9. A document of value (1, 14) according to at least one of claims 1 to 7, **characterized in that** the security element (5, 23, 24, 25, 26, 27) is disposed on a plastic foil that is connected with the document of value (1, 14).

10. A document of value (1, 14) such as a paper of value or ID card with a security element (21) having at least one optically variable material that conveys different color effects at different viewing angles, and at least one machine-readable feature substance (8) that does not impair the visually visible optically variable effect of the optically variable material, the optically variable material and the feature substance (8) being disposed in one layer and said layer being a self-supporting plastic foil (9) and the optically variable material (4, 7, 9, 15) being a pigment or a particle with suitable size and shape factor.

11. A document of value (1, 14) according to at least one of claims 1 to 10, **characterized in that** the plastic foil (9) is present in the form of a thread or band that is freely accessible at least partially on the surface of the document of value (1).

12. A document of value (1) according to at least one of claims 1 to 10, **characterized in that** the plastic foil (9) is present in the form of a label that is applied to the document of value (1).

13. A document of value (1, 14) according to at least one of claims 1 to 10, **characterized in that** the plastic foil (9) forms a cover foil of the document of value.

14. A document of value (1, 14) according to at least one of claims 1 to 13, **characterized in that** the optically variable material (4, 7, 9, 15) is a liquid-crystal material.

15. A document of value (1, 14) according to at least one of claims 1 to 14, **characterized in that** the optically variable material (4, 7, 9, 15) is a liquid-crystal polymer material or microencapsulated liquid-crystal material.

16. A document of value (1, 14) according to at least one of claims 1 to 13, **characterized in that** the optically variable material (4, 7, 9, 15) is an interference layer material.

17. A document of value (1, 14) according to at least one of claims 1 to 16, **characterized in that** the machine-readable feature substance (8, 18, 19) is transparent in the visible spectral region.

18. A document of value (1, 14) according to at least one of claims 1 to 17, **characterized in that** the machine-readable feature substance (8, 19) is a material luminescing outside the visible spectral region.

19. A document of value (1, 14) according to claim 18, **characterized in that** the luminescent substance is an inorganic luminescent substance.

20. A document of value (1, 14) according to at least one of claims 1 to 19, **characterized in that** the machine-readable feature substance (8) is an IR-absorbent material.

21. A document of value (1, 14) according to at least one of claims 1 to 20, **characterized in that** the security element is present on the document of value as a multilayer transfer element in whose layer structure the optically variable material and feature substance are disposed.

22. A foil (9) having at least one optically variable material (7, 9, 15, 39, 40, 41) that conveys different color effects at different viewing angles, **characterized in that** the foil (9) additionally has at least one machine-readable feature substance (8) that does not impair the visually visible optically variable effect of the optically variable material and the foil (9) consists of a polymer material in which optically variable pigments and the feature substance (8) are embedded.

23. A foil (9) according to claim 22, **characterized in that** the foil (9) consists of a liquid-crystal or electrically conductive polymer material in which the feature substance (8) is embedded.

24. A foil according to at least one of claims 22 to 23, **characterized in that** a security element (23, 24, 25, 26, 27) is disposed on the foil (9), said element consisting of a printed image having a first printed layer (16, 37) containing the feature substance (17, 30, 32), and an optically variable material (15, 39, 40, 41) disposed over said printed layer (16, 37).

25. A multilayer transfer material (22) having at least one optically variable material (12) that conveys different color effects at different viewing angles, **characterized in that** the transfer material (22) additionally has at least one machine-readable feature substance (8) that does not impair the visually visible optically variable effect of the optically variable material (12) and the optically variable material (4, 7, 9, 15) is a pigment or a particle with suitable size and shape factor.

26. A multilayer transfer material (22) according to claim 25, **characterized in that** the transfer material is formed as a hot stamping foil or label material.

27. A printing ink having at least one binder and one optically variable material that conveys different color effects at different viewing angles, **characterized in that** the printing ink additionally has at least one machine-readable feature substance (8) that does not impair the visually visible optically variable effect of the optically variable material.

28. A printing ink according to claim 27, **characterized in that** the printing ink contains optically variable pigments in 10 to 30 wt% and feature substance in 0.01 to 30 wt%, preferably 0.01 to 10 wt%, based on the binder.

29. Plastics pellets, **characterized in that** the plastic pellets have at least one optically variable material that conveys different color effects at different viewing angles and at least one machine-readable feature substance that does not impair the visually visible optically variable effect of the optically variable material.

30. Use of a foil (9) according to at least one of claims 22 to 24 for producing security elements or documents of value.

31. Use of a multilayer transfer material (22) according to claim 25 or 26 for producing security elements or documents of value.

32. Use of a printing ink according to claim 27 or 28 for security printing, in particular printing papers of value.

33. A method for testing a document of value according to claim 1, **characterized in that** the existence of the optically variable material is tested in a first step and the feature substance is tested in the area of the optically variable material in a second step.

## Revendications

1. Document de sécurité (1, 14), comme un titre ou une carte d'identité, comportant un élément de sécurité (23, 24, 25, 26, 27) qui présente au moins une matière optiquement variable (15, 39, 40, 41), laquelle donne des impressions de couleur différentes sous des angles d'observation différents, et au moins une substance caractéristique (16, 17, 18, 19, 30, 37) lisible par une machine qui n'influence pas l'effet optiquement variable, visuellement perceptible, de la matière optiquement variable (4, 15), dans lequel la substance caractéristique (16, 17, 18, 19, 30, 37) existe sous la forme d'un codage ou d'une information alphanumérique et la matière optiquement variable (4, 7, 9, 15) est un pigment ou une particule ayant une grandeur et un facteur de forme appropriés.

2. Document de sécurité (1, 14) selon la revendication 1, **caractérisé en ce que** l'élément de sécurité (23, 24, 25, 26, 27) est constitué d'une image imprimée qui présente une première couche imprimée (16, 37), contenant la substance caractéristique (17, 30, 32), sous la forme du codage ou de l'information alphanumérique, et une matière optiquement variable (15, 39, 40, 41), disposée au-dessus de cette couche imprimée (16, 37).

3. Document de sécurité selon la revendication 1 ou 2, **caractérisé en ce que** l'élément de sécurité (26, 27) présente une deuxième couche imprimée (31, 36) ne contenant pas de substance caractéristique, qui est disposée de façon repérée par rapport à la première couche imprimée (16, 37) et donne le même aspect visuel que la première couche (16, 37).

4. Document de sécurité (1, 14) selon au moins l'une quelconque des revendications 1 à 3, **caractérisé en ce que** la première couche imprimée a une couleur sombre, de préférence noire.

5. Document de sécurité (1, 14) selon au moins l'une quelconque des revendications 1 à 4, **caractérisé en ce que** l'élément de sécurité (23, 24, 25, 26, 27) présente deux matières en cristaux liquides (40, 41) avec des propriétés de polarisation différentes.

6. Document de sécurité (1, 14), comme un titre ou une carte d'identité, comportant un élément de sécurité (5) qui présente au moins une matière optiquement variable, laquelle donne des impressions de couleur différentes sous des angles d'observation différents, et au moins une substance caractéristique lisible par une machine qui n'influence pas l'effet optiquement variable, visuellement perceptible, de la matière optiquement variable, dans lequel la matière optiquement variable et la substance caractéristique sont disposées en une couche (4) et cette couche (4) existe sous la forme d'une information et la matière optiquement variable (4, 7, 9, 15) est un pigment ou une particule ayant une grandeur et un facteur de forme appropriés.

7. Document de sécurité (1, 14) selon la revendication 6, **caractérisé en ce que** la couche (4) existe sous la forme d'une surimpression sur le document de sécurité (1).

8. Document de sécurité (1, 14) selon la revendication 6 ou 7, **caractérisé en ce que** la couche (4) présente un liant en matière électriquement conductrice et des pigments optiquement variables dispersés dans celui-ci.

9. Document de sécurité (1, 14) selon au moins l'une quelconque des revendications 1 à 17, **caractérisé en ce que** l'élément de sécurité (5, 23, 24, 25, 26, 27) est disposé sur une feuille de matière plastique qui est reliée avec le document de sécurité (1, 14).

10. Document de sécurité (1, 14), comme un titre ou une carte d'identité, comportant un élément de sécurité (21) qui présente au moins une matière optiquement variable, laquelle donne des impressions de couleur différentes sous des angles d'observation différents, et au moins une substance caractéristique lisible par une machine (8) qui n'influence pas l'effet optiquement variable, visuellement perceptible, de la matière optiquement variable, dans lequel la matière optiquement variable et la substance caractéristique (8) sont disposées en une couche et cette couche est une feuille en matière plastique (9) autoportante la matière optiquement variable (4, 7, 9, 15) est un pigment ou une particule ayant une grandeur et un facteur de forme appropriés.

11. Document de sécurité (1, 14) selon au moins l'une quelconque des revendications 1 à 10, **caractérisé en ce que** la feuille en matière plastique (9) existe sous la forme d'un fil ou d'une bande qui est librement accessible au moins partiellement à la surface du document de sécurité (1).

12. Document de sécurité (1) selon au moins l'une quelconque des revendications 1 à 10, **caractérisé en ce que** la feuille en matière plastique (9) existe sous la forme d'une étiquette qui est posée sur le document de sécurité (1).

13. Document de sécurité (1, 14) selon au moins l'une quelconque des revendications 1 à 10, **caractérisé en ce que** la feuille en matière plastique (9) constitue une feuille de couverture du document de sécurité.

14. Document de sécurité (1, 14) selon au moins l'une quelconque des revendications 1 à 13, **caractérisé en ce que** la matière optiquement variable (4, 7, 9, 15) est une matière en cristaux liquides.

15. Document de sécurité (1, 14) selon au moins l'une quelconque des revendications 1 à 14, **caractérisé en ce que** la matière optiquement variable (4, 7, 9, 15) est une matière polymère en cristaux liquides ou une matière en cristaux liquides contenue dans des microcapsules.

16. Document de sécurité (1, 14) selon au moins l'une quelconque des revendications 1 à 13, **caractérisé en ce que** la matière optiquement variable (4, 7, 9, 15) est une matière en couches d'interférences.

17. Document de sécurité (1, 14) selon au moins l'une quelconque des revendications 1 à 16, **caractérisé en ce que** la substance caractéristique (8, 18, 19) lisible par une machine est transparente dans le domaine spectral visible.

18. Document de sécurité (1, 14) selon au moins l'une quelconque des revendications 1 à 17, **caractérisé en ce que** la substance caractéristique (8, 19) lisible par une machine est une substance luminescente en dehors du domaine spectral visible.

19. Document de sécurité (1, 14) selon la revendication 18, **caractérisé en ce que** la substance luminescente est une substance luminescente inorganique.

20. Document de sécurité (1, 14) selon au moins l'une quelconque des revendications 1 à 19, **caractérisé en ce que** la substance caractéristique (8) lisible par une machine est une substance absorbant les IR.

21. Document de sécurité (1, 14) selon au moins l'une quelconque des revendications 1 à 20, **caractérisé en ce que** l'élément de sécurité existe en tant qu'élément de transfert multicouche sur le document de sécurité, dans la structure des couches duquel la matière optiquement variable et la substance caractéristique sont disposées.

22. Feuille (9) qui présente au moins une matière optiquement variable (7, 9, 15, 39, 40, 41), laquelle donne des impressions de couleur différentes sous des angles d'observation différents, **caractérisée en ce que** la feuille (9) présente en plus au moins une substance caractéristique (8) lisible par une machine qui n'influence pas l'effet optiquement variable, visuellement perceptible, de la matière optiquement variable et **en ce que** la feuille (9) est constituée d'une matière polymère, dans laquelle les pigments optiquement variables et la substance caractéristique (8) sont noyés.

23. Feuille (9) selon la revendication 22, **caractérisée en ce que** la feuille (9) est constituée d'une matière polymère en cristaux liquides ou électriquement conductrice, dans laquelle la substance caractéristique (8) est noyée.

24. Feuille selon au moins l'une quelconque des revendications 22 à 23, **caractérisée en ce que**, sur la feuille (9), est disposé un élément de sécurité (23, 24, 25, 26, 27), qui est constitué d'une image imprimée qui présente une première couche imprimée (16, 37), contenant la substance caractéristique (17, 30, 32), et une matière optiquement variable (15, 39, 40, 41), disposée au-dessus de cette couche imprimée (16, 37).

25. Matière de transfert multicouche (22) qui présente au moins une matière optiquement variable (12), laquelle donne des impressions de couleur différentes sous des angles d'observation différents, **caractérisée en ce que** la matière de transfert (22) présente en plus au moins une substance caractéristique (8) lisible par une machine qui n'influence pas l'effet optiquement variable, visuellement perceptible, de la matière optiquement variable et la matière optiquement variable (12) est un pigment ou une particule ayant une grandeur et un facteur de forme appropriés.

26. Matière de transfert multicouche (22) selon la revendication 25, **caractérisée en ce que** la matière de transfert est conçue en tant que feuille pour estampage à chaud ou matière pour étiquette.

27. Encre d'imprimerie, qui présente au moins un liant et une matière optiquement variable, laquelle donne des impressions de couleur différentes sous des angles d'observation différents, **caractérisée en ce que** l'encre présente en plus au moins une substance caractéristique (8) lisible par une machine qui n'influence pas l'effet optiquement variable, visuellement perceptible, de la matière optiquement variable.

28. Encre d'imprimerie selon la revendication 27, **caractérisée en ce que** l'encre d'imprimerie contient des pigments optiquement variables en 10 à 30 % du poids et une substance caractéristique en 0,01 à 30 % d poids, de préférence 0,01 à 10 % du poids en fonction du liant.

29. Granulat en matière plastique, **caractérisé en ce que** le granulat en matière plastique présente au moins une matière optiquement variable, laquelle donne des impressions de couleur différentes sous des angles d'observation différents, et au moins une substance caractéristique lisible par une machine qui n'influence pas l'effet optiquement variable, visuellement perceptible, de la matière optiquement variable.

30. Utilisation d'une feuille (9) selon au moins l'une quelconque des revendications 22 à 24 pour la fabrication d'éléments de sécurité ou de documents de sécurité.

31. Utilisation d'une matière de transfert multicouche (22) selon la revendication 25 ou 26 pour la fabrication d'éléments de sécurité ou de documents de sécurité.

32. Utilisation d'une encre d'imprimerie selon la revendication 27 ou 28 pour l'impression de sécurité, en particulier l'impression de titres.

33. Procédé de contrôle d'un document de sécurité selon la revendication 1, **caractérisé en ce que**, dans une première phase, la présence de la matière optiquement variable est vérifiée et, dans une deuxième phase, la substance caractéristique est vérifiée dans le domaine de la matière optiquement variable.
